Europäisches Patentamt

(19) European Patent Office

Office européen des brevets

(11) **EP 0 840 386 A1**

(12) **EUROPEAN PATENT APPLICATION**
published in accordance with Art. 158(3) EPC

(43) Date of publication:
06.05.1998 Bulletin 1998/19

(21) Application number: 96918893.7

(22) Date of filing: 24.06.1996

(51) Int. Cl.$^6$: **H01M 4/58**

(86) International application number:
PCT/JP96/01744

(87) International publication number:
WO 97/01193 (09.01.1997 Gazette 1997/03)

(84) Designated Contracting States:
DE FI FR GB SE

(30) Priority: 22.06.1995 JP 156547/95

(71) Applicant:
SEIKO INSTRUMENTS INC.
Chiba-shi, Chiba 261 (JP)

(72) Inventors:
• TAHARA, Kensuke,
c/o Seiko Instruments Inc.
Chiba-shi, Chiba 261 (JP)
• IWASAKI, Fumiharu,
c/o Seiko Instruments Inc.
Chiba-shi, Chiba 261 (JP)
• YAHAGI, Seiji,
c/o Seiko Instruments Inc.
Chiba-shi, Chiba 261 (JP)

• SAKATA, Akifumi,
c/o Seiko Instruments Inc.
Chiba-shi, Chiba 261 (JP)
• SAKAI, Tsugio,
c/o Seiko Instruments Inc.
Chiba-shi, Chiba 261 (JP)
• ISHIKAWA, Hideki,
c/o SII Micro Parts Ltd.
Sendai-shi, Miyagi 982 (JP)
• TAKASUGI, Shinichi,
c/o SII Micro Parts Ltd.
Sendai-shi, Miyagi 982 (JP)

(74) Representative:
Sturt, Clifford Mark et al
J. MILLER & CO.
34 Bedford Row,
Holborn
London WC1R 4JH (GB)

(54) **NONAQUEOUS ELECTROLYTE SECONDARY BATTERY**

(57)     In a nonaqueous electrolyte secondary battery including at least negative electrode, a positive electrode, and a lithium-ion-conductive nonaqueous electrolyte, a lithium-containing silicon oxide which is represented by a composition formula $Li_xSiO_y$ where a lithium content x and an oxygen content y are restricted to be in respective ranges of $1.5 \leq x \leq 4$ and $0 < y < 2$ is used as a negative -electrode active material. It is even preferable that the above negative electrode be combined with a positive electrode having, as a positive-electrode active material, a transition metal oxide, particularly a lithium-containing metal oxide, selected from Co, Ni, Mn, Fe, V, W, Nb, Ti, and the like.

The potential of the negative-electrode active material is low, i.e., base, the charge/discharge capacity is large in a base potential range of 0 to 1 V with respect to metal lithium, and the polarization (internal resistance) during charge and discharge is small. Therefore, there can be obtained a secondary battery which has a high voltage and a high energy efficiency, is superior in large-current chraging/dischraging characteristics, and has a high charging/discharging efficiency. Further, the secondary battery is highly reliable; that is, it is free of such failures as internal short-ciruiting due to dendrite generation, is stable, and has a long cycle life.

**Description**

Technical Field

This invention relates to a nonaqueous elctrolyte secondary battery using a substance capable of absorbing and releasing lithium ions as a negative electrode active material and adopting a lithium ion-conducting nonaqueous electrolyte and more particularly relates to a novel negative electrode active material for allowing provision of a novel secondary battery exhibiting high voltage, high energy density, and an excellent charging-discharging property, enjoying a long cycle life, and abounding in reliability.

Background Art

In recent years, the prominent advance attained by portable electronic devices, communication devices, and the like has urged the appearance of these devices in numerous and versatile forms, which demand batteries as power sources thereof to generate a large current output. From the viewpoint of the economy and the trend of devices in general toward decreases in size and weight, the desirability of a secondary battery of a high energy density has been finding enthusiastic recognition. The research and development of a nonaqueous elctrolyte secondary battery possessing high voltage and high energy density, therefore, are being actively pursued. Part of these researches have been already reduced to practice.

The positive electrode active materials for the secondary battery of this kind have been heretofore found in the following three types, depending on the form of the charge and discharge reaction. The first type covers such substances as metal chalcogenides including $TiS_2$, $MoS_2$, $NbSe_3$ and the like and metal oxides including $MnO_2$, $MoO_3$, $V_2O_5$, $Li_xCoO_2$, $Li_xNiO_2$, $Li_xCo_{1-y}Ni_yO_2$, $Li_xMn_2O_4$, $Li_xMnO_2$ and the like which allow lithium ions (cations) alone to ingress into and egress from the interlayers, lattice positions, or lattice gaps of crystals by virtue of the intercalation and deintercalation reactions. The second type covers such conducting polymers as polyaniline, polypyrrole, polyparaphenylene and like which mainly allow only anions the ingress and egress stably by virtue of the doping or undoping reactions. The third type covers graphite intercalation compounds and such conducting polymers as polyacene and the like which allow both lithium cations and anions the egress and ingress (by virtue of intercalation, deintercalation, doping, and undoping reactions).

In the negative electrode active materials, metallic lithium, used independently, proves advantageous in respect that since the metallic lithium has the basest electrode potential, the batteries resulting from combining the metallic lithium with the positive electrodes using such positive electrode active materials as are mentioned above have the highest output voltages and high energy densities. The lithium negative electrode, however, has the problem that it suffers growth thereon of dendrites and passive compounds in consequence of charging and discharging and, therefore, incurs serious deterioration and results in the shorter cycle life thereof. For the purpose of solving this problem, it has been proposed to use as negative electrode active materials (1) alloys of lithium with such other metals as Al, Zn, Sn, Pb, Bi, and Cd, (2) intercalation compounds or insertion compounds having lithium ions occluded in the crystal structures or the amorphous structures of such inorganic compounds as $WO_2$, $MoO_2$, $Fe_2O_3$, $TiS_2$, $Li_xCo_{1-y}Ni_yO_2$, and $Li_xWO_y$, graphite, and carbonaceous materials obtained by baking organic malerials, and (3) conducting polymers such as lithium ion-doped polyacene and polyacetylene and the like, i.e. substances which are capable of absorbing and releasing lithium ions.

Generally, when a battery is constructed by using as a negative electrode active material such a substance other than metallic lithium as is capable of absorbing and releasing lithium ions as described above, since the electrode potential of the negative electrode active material is nobler than that of metallic lithium, the battery is at a disadvantage in exhibiting a fairly lower operating voltage than when metallic lithium alone is used. The operating voltage is lowered, for example, by 0.2 - 0.8 V in batteries using alloys of lithium with Al, Zn, Pb, Sn, Bi, or Cd, 0 - 1 V in those using carbon-lithium intercalation compounds, and 0.5 - 1.5 V in those using such lithium ion insertion compounds as $MoO_2$ or $WO_2$.

Further since elements other than lithium each constitute a negative electrode forming component, they markedly lower the capacity and the energy density per volume and per weight.

When an alloy of lithium with other metal mentioned in (1) above is used, since this alloy has low utility efficiency of lithium during the course of charging and discharging, the battery constructed with this alloy is at a disadvantage in sustaining a crack from repeated cycles of charging and discharging and ultimately breaking and offering only a short cycle life. When a lithium intercalation compound or insertion compound mentioned in (2) above is used, the compound suffers such deteriorations as disintegration of the crystal structure thereof and occurrence of an irreversible substance due to excessive charging and discharging, and further since the compound exhibits a higher (nobler) electrode potential in many cases, the battery constructed with this compound is at a disadvantage in offering only a low output voltage. When a conducting polymer mentioned in (3) above is used, the problem arises that the capacity for charging and discharging particularly per unit volume is small.

To produce a secondary battery exhibiting high voltage and high energy density, excelling in charging and discharging characteristics, and offering a long cycle life, therefore, the negative electrode active material requires to exhibit a low (base) electrode potential relative to lithium, precludes such degradations as disintegration of crystal structure and occurrence of an irreversible substance due to the occlusion and release of lithium ions during the course of the charging and discharging, and has a larger amount of lithium to be reversibly occluded and released, that is, a larger effective charge and discharge capacity.

Formerly, the present inventors acquired a knowledge that a silicon oxide containing lithium represented by the compositional formula, $Li_xSiO_y$ (wherein x and y respectively satisfy the expressions, $0 \leqq x$ and $0 < y < 2$), is capable of electrochemically stably repeating the occlusion and release of lithium ions in a nonaqueous electrolyte at least at an electrode potential in the range of 0 - 3 V based on the lithium standard (metallic lithium) electrode, possesses a markedly high charging and discharging capacity particularly in the region of a base potential of 0 - 1 V owing to such charging and discharging reactions, and constitutes an outstanding negative electrode active material. Japanese patent applications were filed(Japanese Patent Applications 04-265,179, 05-35,851, and 05-162,958) covering their inventions originating in this knowledge.

After a subsequent study, it was found that when a nonaqueous secondary battery using the lithium-containing silicon oxide, $Li_xSiO_y$ as a negative electrode active material is charged and discharged, this battery has the possibility of generating an internal short-circuit, causing an abnormal change in the battery voltage, and ceasing to be normally charged and discharged. Further, the charging and discharging characteristics at a large current are still short of being sufficient owing to the internal resistance.

With a view to determining the cause for this problem, they a test cell composed of a working electrode possessing the oxide $Li_xSiO_y$, a counter electrode formed of metallic lithium, and a nonaqueous electrolyte was changed and discharged to effect occlusion and release of lithium ions electrochemically into the oxide $Li_xSiO_y$, and studied the relation between the lithium content x of the working electrode and the potential and the polarization. As a result, it was found that the capacity for stably repeating charging and discharging, namely the amount of lithium ions electrochemically occluded into and released out of the oxide $Li_xSiO_y$, is limited and that the polarization (internal resistance) of the $Li_xSiO_y$ electrode is prominently changed by the lithium content x. The oxide $Li_xSiO_y$ undergoes a markedly large polarization at $x > 4$, permits no easy further occlusion of lithium ions at a practically large current density, and the lithiumions are deposited and generate dendrite on the electrode and the current collector, though variable with the oxygen content y. It has been found that the dendrite, when serious, passes through the separator, reaches the counter electrode, and induces internal short-circuit. It has been further found that during the course of discharging subsequent to that of charging, the polarization is still large and the potential is markedly high (noble) at $x < 1.5$. Specifically, the lithium-containing silicon oxide $Li_xSiO_y$, when the lithium content x is in the range of $1.5 \leqq x \leqq 4$, produces a small polarization (internal resistance) during the course of charging and discharging, possesses a base potential, and excels in charging and discharging characteristics as a negative electrode, though variable with the oxygen content y. It has been further found that the potential is baser, the polarization is smaller, and the efficiency (reversibility) of repeated charging and discharging is higher particularly when the lithium content x is in the range of $2 \leqq x \leqq 3.9$ and that a battery using this oxide as a negative electrode active material generates a higher output voltage, offers only a smaller internal resistance, and particularly excels in charging and discharging characteristics. The present invention has been produced as a result.

Disclosure of the Invention

The present invention, perfected based on the knowledge mentioned above, contemplates using as a negative electrode active material for a battery of the kind under discussion a substance capable of absorbing and releasing lithium ions which is composed of a lithium-containing silicon oxide represented by the compositional formula, $Li_xSiO_y$, wherein the lithium content x and the oxygen content y respectively satisfy the expressions, $1.5 \leqq x \leqq 4$ and $0 < y < 2$. Specifically, a composite oxide, i.e. an oxide of silicon containing lithium in the crystal structure or the amorphous structure possessing the ability to occlude and release lithium ions through electrochemical reactions in a nonaqueous electrolyte and having a composition such that the ratio, x, of the number of lithium atoms to the number of silicon atoms is not less than 1.5 and not more than 4.0 and the ratio, y, of the number of oxygen atoms to the number of silicon atoms is larger than 0 and smaller than 2. The lithium in this composite oxide is preferred, though not always required, to be mainly in the form of ions.

The following two methods can be exampled, however there is no limitation thereto, as preferred means to produce the lithium-containing silicon oxide, $Li_xSiO_y$ (wherein x and y respectively satisfy the expressions $1.5 \leqq x \leqq 4$ and $0 < y < 2$), to be used as the negative electrode active material in the battery of this invention.

The first method produces a composite oxide of silicon and lithium by mixing each simple substance or compound of silicon and lithium at a predetermined molar ratio and, subsequently to or during the mixture, heat-treating the mixture either in a non-oxidizing atmosphere such as an inert atmosphere or a vacuum or in an atmosphere having the oxygen content thereof so adjusted as to form oxides of silicon and lithium in predetermined numbers. The respective compounds of silicon and lithium to be used as starting materials herein are preferred to be such compounds as oxides or hydroxides, or carbonates or nitrates or other similar salts or organic compounds which produce the respective oxides when heat-treated in a nonoxidizing atmosphere. As means to effect the mixture of these starting materials, various methods are available besides the method of directly dry mixing the raw materials each in the form of powder such as, for example, a method which comprises solving or dispersing these raw materials in water or alcohol or some other solvent, mixing the resultant solution thoroughly thereby causing the raw material to react with each other, and subsequently drying the resultant reaction solution and a method which comprises atomizing or ionizing the raw materials by heating or means of electromagnetic wave or light and simultaneously or alternately vacuum depositing or precipitating the atoms or ions. The temperature of the heat-treatment which is performed subsequently to or during the mixture of the raw materials as described above is preferred to be not lower than 400°C, and more advantageously not lower than 600°C, though variable with the kinds of raw materials and the kind of an atmosphere for enveloping the site of the heat treatment. When the heat treatment is performed in an inert atmosphere or in a vacuum, the temperature of the heat treatment is preferred to be in the range of 600 - 800°C in consideration of the fact that the raw materials possibly yields to a disproportionating reaction and generates silicon and tetravalent silicon oxide at a temperature exceeding 800°C.

In the combinations of these raw materials, when such lithium compounds as lithium oxide $Li_2O$, lithium hydroxide LiOH, lithium salts like $Li_2CO_3$ and $LiNO_3$ and the like, and hydrates thereof which form lithium oxide by a heat treatment are used as a lithium source and when simple substance of silicon or lower oxides of silicon $SiO_{y'}$ (wherein y' satisfies the expression o < y' < 2) are used as a silicon source, the mixture is particularly favorable in respect that it permits the synthesis aimed at to be attained by a heat treatment performed in an inert atmosphere or in such an atmosphere as a vacuum which is devoid of oxygen and enables the production to be easily accomplished with the content of oxygen or the partial pressure of oxygen in the heat-treating atmosphere controlled with ease.

When a varying hydrogen-containing silicic acid is used as the silicon compound and lithium hydroxide is used as the lithium compound for the raw materials, the hydrogen is not thoroughly eliminated by the heat treatment but is allowed to persist partly in the product after the heat treatment. The coexistence of lithium and hydrogen thus possibly attained in the product is embraced by the present invention. Further, by mixing lithium or a compound thereof and silicon or a compound thereof together with other alkali metal such as sodium, potassium, rubidium or the like, an alkaline earth metal such as magnesium or calcium or the like and/or other metallic or nonmetallic elements such as iron, nickel, cobalt, manganese, vanadium, titanium, niobium, tungsten, molybdenum, copper, zinc, tin, lead, aluminum, indium, bismuth, gallium, germanium, carbon, boron, nitrogen, and phosphorus and the like or compounds of the elements and then heat-treating the resultant mixture, the coexistence of lithium and silicon with the other metallic or nonmetallic elements can be attained. The coexistence thus attained is also embraced by this invention.

The lithium-containing silicon oxide obtained as described above can be used as the negative electrode active material either directly or after being optionally subjected to such treatments as pulverization, dressing of grain, or size enlargement or granulation. In the same manner as in the second method which will be described below, by the electrochemical reaction of the lithium-containing silicon oxide with lithium or a lithium-containing substance, the lithium-containing silicon oxide may be caused further to occlude lithium ions or conversely the composite oxide may be caused to release lithium ions and the reaction product with an increased or decreased lithium content may be used as the negative electrode active material.

The second method produces a lithium-containing lower silicon oxide $Li_xSiO_y$ by preparatorily synthesizing a lower silicon oxide $SiO_y$ containing no lithium (wherein y satisfies the expression 2 > y > 0) and subjecting the produced lower silicon oxide $SiO_y$ to an electrochemical reaction with lithium or a lithium-containing substance thereby causing the lower silicon oxide $SiO_y$ to occlude lithium ions. As concrete examples of the lower silicon oxide $SiO_y$, such oxides of stoichiometric compositions as $SiO_{1.5}$ ($Si_2O_3$), $SiO_{1.33}$ ($Si_3O_4$), $SiO$, and $SiO_{0.5}$ ($Si_2O$) and such oxides of arbitrary containing nonstoichiometric compositions satisfying the requirement that y is more than 0 and less than 2 may be cited. The lower silicon oxide $SiO_y$ can be produced by various known methods which are indicated below. They are (1) a method which comprises mixing silicon dioxide $SiO_2$ and silicon Si at a predetermined molar ratio and heating the resultant mixture in a non-oxidizing atmosphere or in a vacuum, (2) a method which comprises heating silicon dioxide $SiO_2$ in a reducing gas such as hydrogen $H_2$ and the like until a predetermined amount thereof is reduced, (3) a method which comprises mixing silicon dioxide $SiO_2$ with carbon C and/or a metal and heating the resultant mixture until a predetermined amount thereof is reduced, (4) a method which comprises heating silicon Si with oxygen gas or an oxide until a prescribed amount thereof is oxidized, and (5) a CVD method or a plasma CVD method which comprises subjecting a mixed gas consisting of a silicon compound such as silane $SiH_4$ and the like and oxygen $O_2$ to a heating reaction or a plasma decomposition reaction, for example.

The lower silicon oxide $SiO_y$ is allowed to contain therein hydrogen and/or alkali metals such as sodium, potassium, and rubidium, alkaline earth metals such as magnesium and calcium and the like, and/or other metallic or nonmetallic elements such as iron, nickel, cobalt, manganese, vanadium, titanium, niobium, tungsten, molybdenum, copper, zinc, tin, lead, aluminum, indium, bismuth, gallium, germanium, carbon, boron, nitrogen, and phosphorus and the like together with silicon. This incorporation of the additional elements is embraced in this invention.

As the lithium-containing substance which is used for the electrochemical reaction, such an active material capable of absorbing and releasing lithium ions as can be used for a positive electrode active material or a negative electrode active material dealt with in the preceding paragraph titled "Background Art" may be adopted.

The occlusion of lithium ions in the lower silicon oxide $SiO_y$ by the electrochemical reaction can be effected within a battery after the assembly of the battery or inside or outside the battery while the battery is in the process of manufacture. Specifically, it is carried out as follows.

(1) An electrochemical cell is constructed by molding in a predetermined shape the lower silicon oxide or a mixture thereof with a conducting agent and a binding agent thereby preparing one electrode (working electrode), forming the other electrode (counter electrode) with metallic lithium or a lithium-containing substance, and opposing the two electrode across an intimately interposed lithium ion-conducting nonaqueous electrolyte. A proper electric current is passed through this electrochemical cell in a direction for the working electrode to generate a cathode reaction so as to induce electrochemical occlusion of lithium ions in the lower silicon oxide. A nonaqueous electrolyte secondary battery is constructed by directly using the produced working electrode as a negative electrode or as a negative electrode active material destined to form a negative electrode.

(2) A laminate electrode is obtained by molding in a predetermined shape the lower silicon oxide or a mixture thereof with a conducting agent and a binding agent and then contact superposing elemental lithium or a lithium alloy on the resultant molded sheet and the laminate electrode is incorporated as a negative electrode in a nonaqueous electrolyte secondary battery. In the battery, this laminate electrode on contact with the electrolyte forms a kind of local cell and self-discharges to effect electrochemical occlusion of lithium into the lower silicon oxide.

(3) A nonaqueous electrolyte secondary battery is constructed by using the lower silicon oxide as a negative electrode active material and a lithium-containing substance capable of absorbing and releasing lithium ions as a positive electrode active material. When this battery is put to use and charged, the lithium ions released from the positive electrode thereof are occluded in the lower silicon oxide.

The lithium-containing silicon oxide $Li_xSiO_y$ thus obtained is used as a negative electrode active material.

As the positive electrode active material, metal chalcogenides such as $TiS_2$, $MoS_2$, $NbSe_2$ and the like, metal oxides such as $MnO_2$, $MoO_3$, $V_2O_5$, $Li_xCoO_2$, $Li_xNiO_2$, $Li_xCo_{1-y}Ni_yO_2$, $Li_xMn_2O_4$, $Li_xMnO_2$ and the like, conducting polymers such as polyaniline, polypyrrole, polyparaphenylene, polyacene and the like, and graphite intercalation compounds which are capable of absorbing and releasing lithium ions and/or anions can be used.

Particularly, the negative electrode using the lithium-containing silicon oxide $Li_xSiO_y$ of this invention as the active material thereof is at an advantage in exhibiting a low (base) electrode potential relative to metallic lithium and a markedly large charging-discharging capacity in a base region of not more than 1 V. Advantageously, therefore, this negative electrode is used in combination with a positive electrode using a metal oxide or a metal chalcogenide mentioned above which has an electrode potential of not lower than 2 V relative to metallic lithium or preferably a (noble) active material as $V_2O_5$, $MnO_2$, $Li_xCoO_2$, $Li_xNiO_2$, $Li_xCo_{1-y}Ni_yO_2$, $Li_xMn_2O_4$, $Li_xMnO_2$ and the like which have high potentials of 3 V to not less than 4 V to produce a secondary batter which has high voltage and high energy density and excels in charging-discharging characteristics.

In the positive electrode active materials, when a transition metal oxide such as $MnO_2$, $MoO_3$, $V_2O_3$ or the like which contains no lithium before the assembly of a battery and is enabled to contain lithium by discharge either after the production of the battery or during the course of production thereof is used for a positive electrode, it is particularly advantageous to use as a negative electrode active material a lithium-containing silicon oxide $Li_xSiO_y$ having a lithium content x satisfying the expression $2 \leqq x \leqq 4$ in view of the fact that this combination permits production of a nonaqueous electrolyte secondary battery which has a large capacity for permitting repeated charging and discharging, offers only a small internal resistance, and incurs only a small cycle deterioration. When $MnO_2$, $V_2O_5$ or the like is used as a positive electrode active material, since the charging and discharging ability of the electrode is degraded by the dislocation isintegration of the crystal structure and the occurrence of an irreversible substance as the lithium content in the transition metal oxide exceeds 1 mol per mol of Mn or V, the lithium contents in the positive electrode and the negative electrode are preferred to be controlled so that the lithium content x per mol of Mn or V may fall in the range of $0 \leqq x \leqq 1$ during either of the states of charging and discharging. The range of $0 \leqq x \leqq 0.8$ proves particularly favorable in respect that the deterioration due to the repeated charging and discharging is small. Particularly, a $\beta$ type or $\gamma \cdot \beta$ type $MnO_2$ which is obtained by heat-treating $MnO_2$ at a temperature in the range of 300 - 450°C thereby effecting thorough elimination of water from the structure is used to advantage as a positive electrode active material because it exhibits excellent charging-discharging characteristics.

It is especially favorable to use a negative electrode using the lithium-containing silicon oxide $Li_xSiO_y$ of this invention as an active material in combination with a positive electrode which uses as an active material a transition metal coposite oxide represented by a compositional formula $Li_aT_bL_cO_d$, wherein T stands for at least one transition metal element selected from the group consisting of Co, Ni, Mn, Fe, V, W, Nb, and Ti, L stands for at least one element selected from the group consisting of B, Si, P, Mg, Zn, and Cu, and a, b, c, and d satisfy the expressions, $0 < a \leq 1.15$, $0.8 \leq b + c \leq 1.3$, $0 \leq c$, and $1.7 \leq d \leq 2.5$, and containing lithium in advance in the structure in respect that this combination allows production of a secondary battery which exhibits very high energy density, excels in charging-discharging characteristics, incurs only small deterioration due to excessive charging and excessive discharging, and offering a long cycle life. It is more favorable to use a lithium-containing silicon oxide $Li_xSiO_y$ having a lithium content x satisfying the expression, $1.5 \leq x \leq 3.9$ as a negative electrode active material in respect that it allows production of a battery which excels charging and discharging characteristics preeminently and offers a longer cycle life.

The composite oxide $Li_aT_bL_cO_d$ which is used as the positive electrode active material in the battery of this invention can be synthesized as follows. Specifically, it can be obtained by mixing lithium Li, transition metal T, and element L in their simple substances or in the forms of oxides, hydroxides, and salts such as carbonates and nitrates and the like at a predetermined ratio and baking the resultant mixture in an open air or in an oxygen-containing atmosphere at a temperature of not lower than 300°C, preferably in the range of 700 - 900°C. When the oxides or oxygen-containing compounds of Li, T, and L are used as their respective sources, the synthesis may be attained by heating the mixture in an inert atmosphere. The heating time in the range of 4 - 50 hours generally suffices. For promoting the reaction for the synthesis and exalting the uniformity of the reaction product, it is effective to repeat several times the process of heating, cooling, pulverizing, and mixing.

In the compositional formula $Li_aT_bL_cO_d$, though the Li content a in the thermal synthesis mentioned above has a constant ratio a = 1 as the standard, it tolerates an inconstant ratio of about ±15% and permits a proportion in the range of $0 < a \leq 1.15$ to be attained by means of an electrochemical intercalation or deintercalation. The transition metal T is preferred to be Co, Ni, Fe, Mn, Ti, or V. Among the preferred transition metals mentioned above, Co, Ni, and Mn are favorable particularly in the sense that they exhibit excellent charging and discharging characteristics. The content c of L which is selected from the group consisting of B, Si, P, Mg, Zn, and Cu, the content b of the transition metal T, and the content d of oxygen are preferred to satisfy the expressions, $0 < c$, $0.8 \leq b + c \leq 1.3$, and $1.7 \leq d \leq 2.5$ in the sense that they enable the product of synthesis to exhibit only small polarization (internal resistance) during the course of charging and discharging and excel in the charging and discharging characteristics. The capacity for charging and discharging in each cycle lower when the content c of L is unduly large and is maximum when the content c falls in the range of $0 < c \leq 0.5$. Thus, the content c falling in this range is particularly favorable.

More advantageously, the product obtained by heat-treating lithium and manganese in their simple substances or in the forms of oxides, hydroxides, or salts such as carbonates or nitrates or the like, mixtures thereof, or coprecipitates thereof at a temperature in the range of 300 - 1100°C is used in the place of the $MnO_2$ as a positive electrode active material in the sense that it enables the produced secondary battery to incur only small deteriorations including a decrease in the capacity for discharging due to repeated charging and discharging and excel further in the charging and discharging characteristics.

Particularly when the product obtained by heat-treating a mixture or a coprecipitate of at least one oxide, hydroxide, or salt of lithium with manganese dioxide at a temperature in the range of 300 - 450°C is used, the produced secondary battery proves advantageous in the sense that it excels in the charging and discharging characteristics.

The charging and discharging characteristics preeminently excel when a lithium-containing manganese oxide represented by the compositional formula $Li_xMnO_y$ (wherein x and y satisfy the expressions $0 \leq x \leq 4$ and $1 \leq y \leq 3$) is used as a positive electrode active material among the lithium-containing manganese oxides obtained as described above. Since the manganese oxide tends to form an irreversible lower oxidation oxide and deteriorate when the lithium content x thereof exceeds 3, though variable with the oxygen content y, it is advantageous to regulate in advance the amounts of a negative electrode and a positive electrode in a battery and lithium contents in the electrodes during the assembly of the battery so that the content x may fall in the range of $0 < x \leq 3$ in either of the states of charging and discharging. The content x falling in the range of $0.05 \leq x \leq 2.8$ proves particularly favorable in the sense that it enables the deterioration due to the repeated charging and discharging to be repressed.

The electrolyte may be a nonaqueous (organic) liquid electrolyte having such a lithium ion-dissociating salt as $LiClO_4$, $LiPF_6$, $LiBF_4$, $LiCF_3SO_3$, $Li(CF_3SO_2)_2N$ or the like solved as a supporting electrolyte in one organic solvent or a mixture of two or more organic solvents such as $\gamma$-butyrolactone, propylene carbonate, ethylene carbonate, butylene carbonate, dimethyl carbonate, diethyl carbonate, ethyl methyl carbonate, methyl formate, 1,2-dimethoxy ethane, tetrahydrofuran, dioxolan, and dimethyl formamide and the like, a polymer solid electrolyte resulting from solid solution of the lithium salt mentioned above with such a polymer compound as polyethylene oxide or cross-linked polyphosphazene, or an inorganic solid electrolyte such as $Li_3N$ or LiI and the like which are lithium ion-conducting nonaqueous electrolytes. An organic liquid electrolyte having such a salt as $LiPF_6$, $LiClO_4$, $LiBF_4$, or $LiCF_3SO_3$ solved in a mixed solvent consisting of a cyclic alkyl carbonate such as propylene carbonate, ethylene carbonate, or butylene carbonate and a chain alkyl carbonate such as dimethyl carbonate, diethyl carbonate, or ethyl methyl carbonate is used particularly advantageously in the sense that it permits production of a battery which excels in charging and discharging characteristics and offers a long cycle life.

6

A negative electrode using as an active material thereof a lithium-containing silicon oxide $Li_xSiO_y$ which has the lithium content x and the oxygen content y respectively regulated so as to satisfy respectively the expressions, $1.5 \leqq x \leqq 4$ and $0 < y < 2$ in accordance with this invention permits lithium ions to be easily occluded in and released from the oxide $Li_xSiO_y$ mentioned above in consequence of the charging and discharging in a nonaqueous electrolyte and, therefore, decreases the polarization and markedly improves the large-current charging and discharging characteristics. Further, since this negative electrode avoids the deposition of lithium dendrite on the negative electrode and the current collector or the occurrence of an irreversible reaction substance during the course of charging and discharging, it attains the repetition of charging and discharging with high efficiency (reversibility) and precludes the occurrence of such defects as an inner short-circuit. It allows production of a nonaqueous electrolyte secondary battery which, because the silicon oxide has a base potential (not more than 1 V relative to metallic lithium),has enjoys high voltage and high energy density.

The potential is base, the polarization is small, and the efficiency (reversibility) for the repeated charging and discharging is high particularly when the lithium content x is in the range of $2 \leqq x \leqq 3.9$. When a lithium-containing silicon oxide having this lithium content is used as a negative electrode active material, the produced nonaqueous electrolyte secondary battery exhibits a high output voltage and a low internal resistance, excels particularly in the charging and discharging characteristics, and precludes the occurrence of such defects as an inner short-circuit.

Brief Description of the Drawings

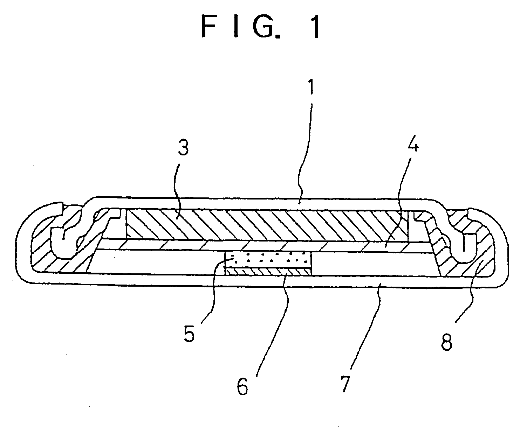

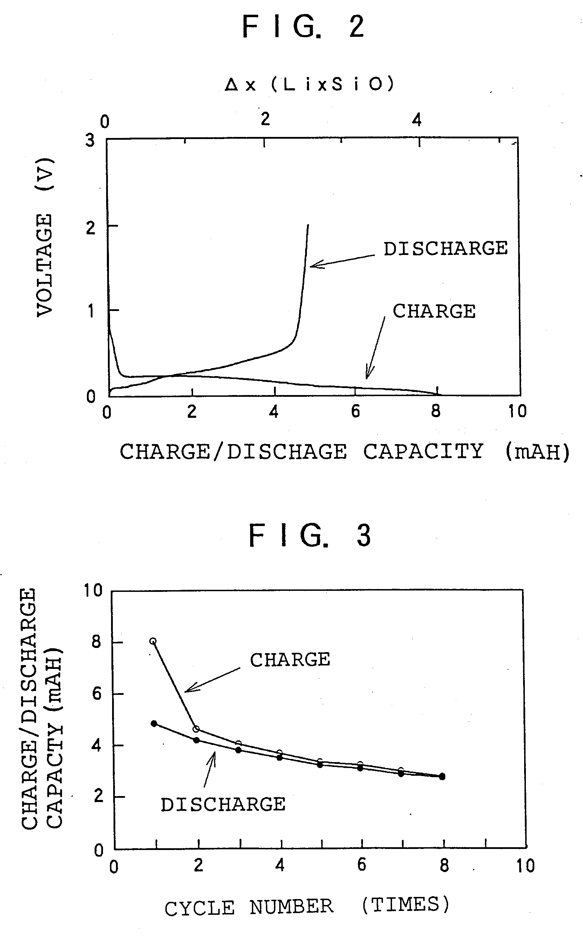

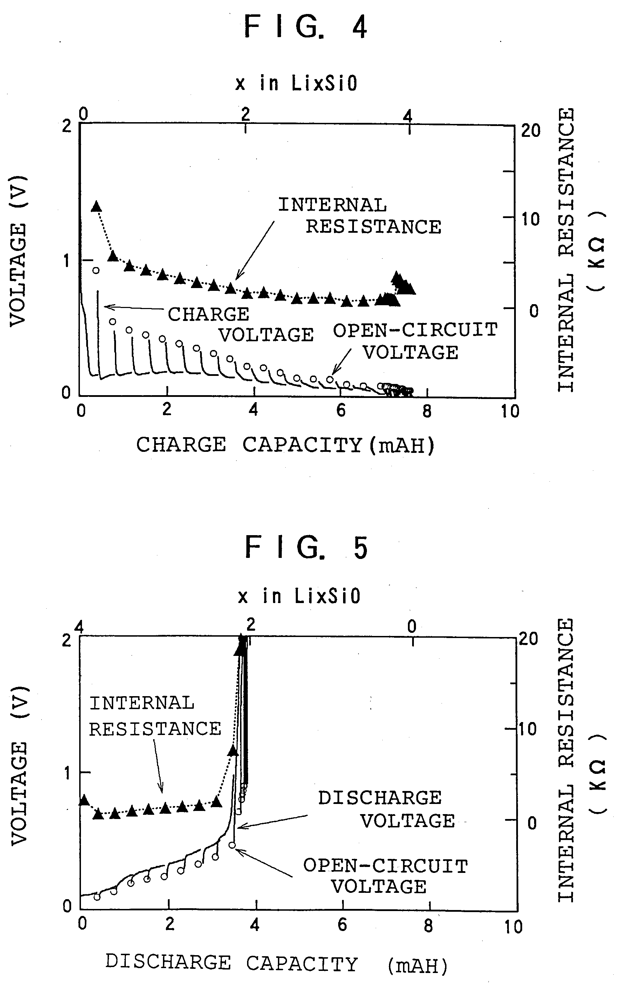

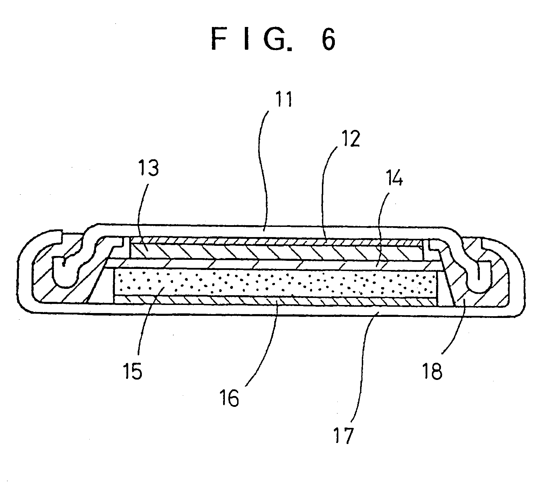

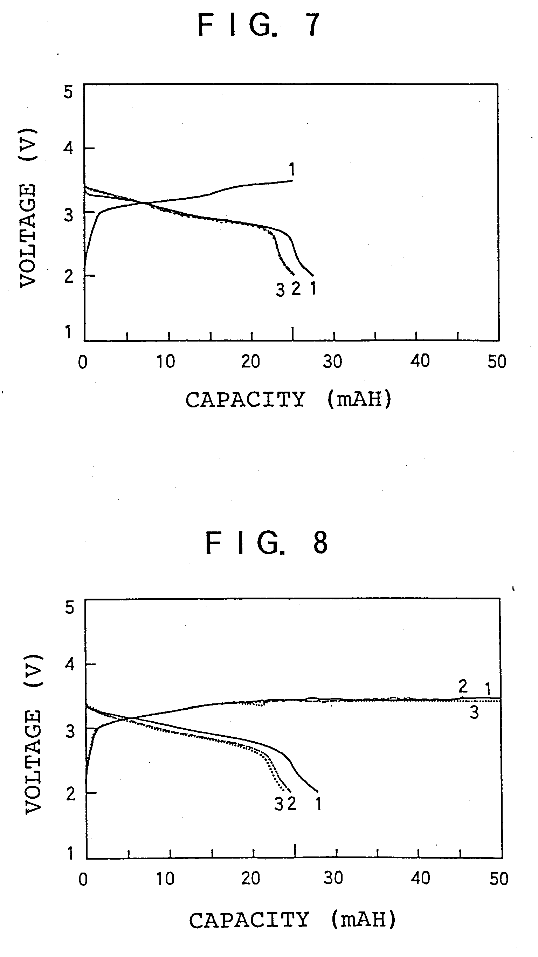

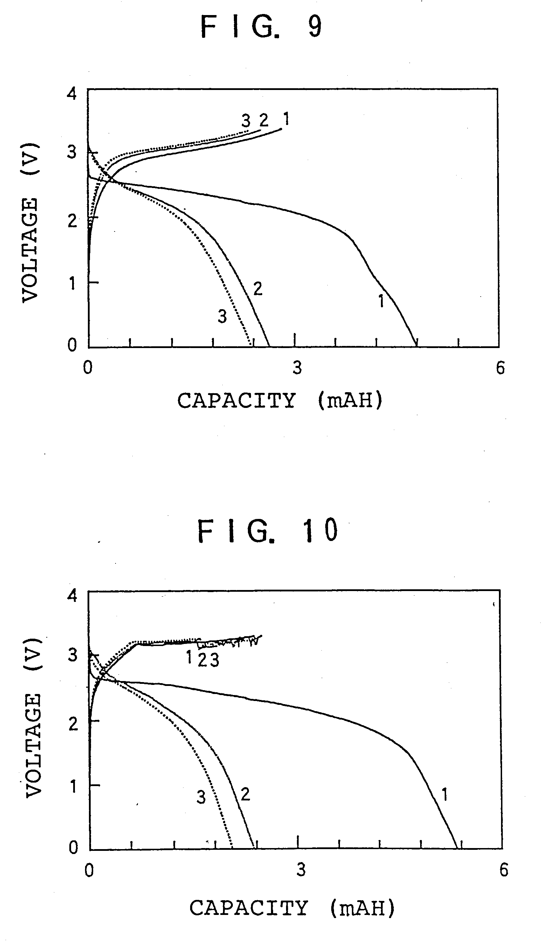

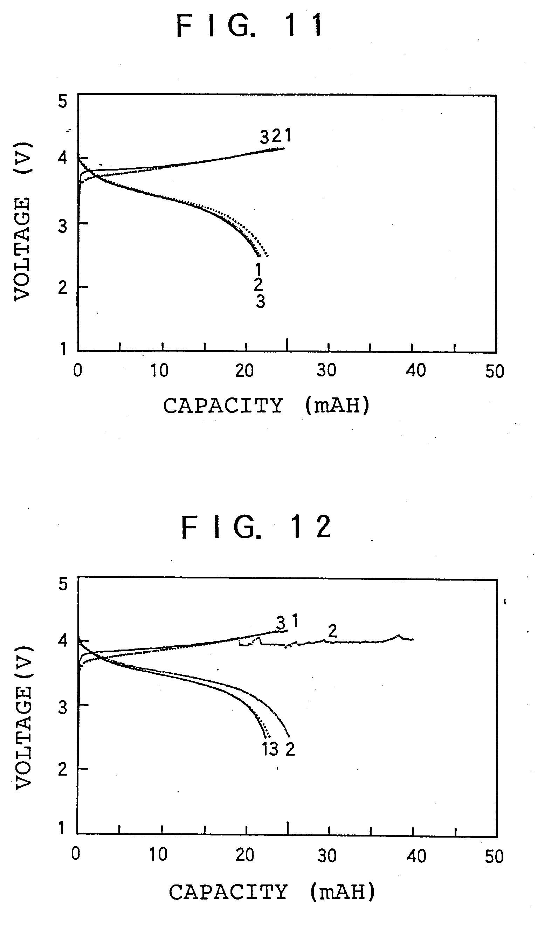

Fig. 1 is an explanatory diagram illustrating one example of the construction of a test cell to be used for the evaluation of the performance of a negative electrode active material, Fig. 2 is an explanatory diagram illustrating the charging and discharging characteristics exhibited during the first cycle by a negative electrode active material according to this invention, Fig. 3 is an explanatory diagram illustrating the charging and discharging cycle characteristics of a negative electrode active material according to this invention, Fig. 4 is an explanatory diagram illustrating the intermittent charging and discharging characteristics of a negative electrode active material according to this invention, Fig. 5 is an explanatory diagram illustrating the intermittent charging and discharging characteristics of a negative electrode active material according to this invention, Fig. 6 is an explanatory diagram illustrating one example of the construction of a battery embodying this invention, Fig. 7 is an explanatory diagram illustrating the charging and discharging characteristics of a battery according to this invention, using vanadium pentoxide in a positive electrode and having a molar ratio of lithium to Si, Li/Si $\leqq$ 4, in a negative electrode, Fig. 8 is an explanatory diagram illustrating the charging and discharging characteristics of a battery using vanadium pentoxide in a positive electrode and having a molar ratio of lithium to Si, Li/Si > 4, in a negative electrode, Fig. 9 is an explanatory diagram illustrating the charging and discharging characteristics of a battery according to this invention, using manganese dioxide in a positive electrode and having a molar ratio of lithium to Si, Li/Si $\leqq$ 4, in a negative electrode, Fig. 10 is an explanatory diagram illustrating the charging and discharging characteristics of a battery using manganese dioxide in a positive electrode and having a molar ratio of lithium to Si, Li/Si > 4, in a negative electrode, Fig. 11 is an explanatory diagram illustrating the charging and discharging characteristics of a battery according to this invention, using a lithium-containing transition metal oxide in a positive electrode and having a molar ratio of lithium to Si, Li/Si $\leqq$ 4, in a negative electrode, and Fig. 12 is an explanatory diagram illustrating the charging and discharging characteristics of a battery using a lithium-containing transition metal oxide in a positive electrode and having a molar ratio of lithium to Si, Li/Si > 4, in a negative electrode.

Best Mode of Embodying the Invention

Now, this invention will be described more specifically below with reference to working examples.

(Example 1)

Fig. 1 is a cross section illustrating one example of a test cell to be used for evaluating the charging and discharging characteristics of a negative electrode active material in a nonaqueous electrolyte secondary battery according to this invention.

In the diagram, 1 stands for a counter electrode case concurrently serving as a counter electrode terminal, obtained by drawing a plate of stainless steel having one of the outer faces thereof plated with Ni, 3 for a counter electrode, obtained by punching a disc, 14 mm in diameter, from a lithium foil of a prescribed thickness and contact superposing the disc to the inside of the counter electrode case 1, 7 for a working electrode case concurrently serving as a working electrode terminal, formed of a stainless steel plate having one of the outer faces thereof plated with Ni, 5 for a working electrode, formed of an active material according to this invention as described specifically herein below, 6 for a working electrode collector formed of a conducting adhesive agent using carbon as a conducting filler, adapted to join the working electrode 5 and the working electrode case 7 and establish electric contact therebetween, 4 for a separator made of a porous film of polypropylene and impregnated with a liquid electrolyte, and 8 for a gasket formed mainly of polypropylene, interposed between the counter electrode case 1 and the working electrode case 7, and adapted to retain electric insulation between the counter electrode and the working electrode and, at the same time, seal tightly the contents of a battery by causing the open edges of the working electrode case to be folded inward and staked. The electrolyte to be used was what was obtained by solving lithium phosphate hexafluoride LiPF6 at a ratio of 1 mol/liter in a mixed solvent consisting of ethylene carbonate and ethyl methyl carbonate at a volumetric ratio of 1 : 1. The test cell measured 20 mm in outside diameter and 1.6 mm in wall thickness.

The working electrode was manufactured as follows. A commercially available silicon monoxide (SiO) pulverized in an automatic mortar to a particle diameter of not more than 44 $\mu$m and then subjected to dressing was used as an active material for the working electrode. A working electrode agent was obtained by mixing this active material, graphite as a conducting agent, and polyvinylidene fluoride as a binding agent at a gravimetric ratio of 45 : 45 : 10. This working electrode agent was press molded under 2 tons/cm$^2$ to produce a pellet, 4.05 mm in diameter and 0.3 mm in thickness, and manufacture the working electrode 5. Then, the working electrode 5 thus obtained was attached integrally to the working electrode case 7 with the aid of the working electrode collector 6 formed of a conducting resin adhesive agent using carbon as a conducting filler and then they are dried under a reduced pressure at 100°C for eight hours and used for the manufacture of the test cell described above.

The test cell manufactured as described above was subjected to charging and discharging cycles under the conditions, 0.07 mA in constant current, 0 V in terminating voltage in the charging (the direction of current in which the battery reaction induces the occlusion of lithium ions from the liquid electrolyte into the working electrode), and 2.0 V in the terminating voltage in the discharging (the direction of current in which the battery reaction induces the release of lithium ions from the working electrode into the liquid electrolyte). The charging and discharging characteristics obtained during the first of the cycles are shown in Fig. 2 and the cycle characteristics similarly obtained are shown in Fig. 3. The test cell was also subjected to the intermittent charging and discharging operations conducted as follows to determine the amount of lithium x, i.e. the content x in the active material Li$_x$SiO, to be occluded when lithium ions were occluded and released electrochemically in the starting active material SiO, the voltage of charging and discharging, the open-circuit voltage (electrode potential), and the polarization (internal resistance). The charging was carried out for 5.5 hours at a constant current of 0.07 mA or for a period required for the voltage to reach 0.005 V, whichever of the durations was shorter. The voltage En measured at the end of the shorter duration was reported. Then, the circuit was opened and then left standing without passing an electric current for 48 hours. At the end of this standing, the open-circuit voltage Eon (electrode voltage) was measured with the electrodes kept in the ensuant state. This procedure was repeated until the duration of one cycle of charging decreased below 0.5 hour. Then, the charging current was lowered to 0.015 mA and the same cycle of charging, opening, and standing as mentioned above was repeated. The charging was terminated when the duration of charging decreased below 0.5 hour. The discharging was carried out for 5.5 hours at a constant current of 0.07 mA or for a period required for the voltage to reach 2.00 V, whichever of the durations was shorter. The voltage En' measured at the end of the shorter duration was reported. Then, the circuit was opened and then left standing without passing an electric current for 48 hours. At the end of this standing, the open-circuit voltage Eon' (electrode voltage) was measured with the electrodes kept in the ensuant state. This procedure was repeated until the duration of one cycle of discharging decreased below 0.5 hour. Then, the discharging current was lowered to 0.015 mA and the same cycle of charging, opening, and standing as mentioned above was repeated. The discharging was terminated when the duration of discharging decreased below 0.5 hour. The internal resistance Ri was calculated from the formula (1) using the values of En, Eon, En', and Eon' determined as described above and the charging current Ic or the discharging current Id. The relations between the content x of the active material Li$_x$SiO and the voltage of charging and discharging, the open-circuit voltage (electrode potential), and the polarization (internal pressure) obtained as described above are shown in Fig. 4 and Fig. 5.

$$Ri = (Eon - En)/Ic \text{ or } (Eon' - En')/Id \tag{1}$$

By conducting a preliminary experiment by using a test cell which was the same as the above-described test cell except that the working electrode did not contain SiO and was instead made of graphite as in the case of the conductive agent, it was confirmed that graphite as the conductive agent that was mixed into the working electrode hardly causes intercalation/deintercration reaction of lithium ions during the charging and discharging and the absorption and emission of lithium ions into and form the working electrode substantially entirely owes to Li$_x$SiO.

It is clearly noted from Fig. 2 and Fig. 3 that when an electrode using a lithium-containing silicon oxide Li$_x$SiO$_y$ as an active material is charged and discharged at a large-current density exceeding 0.5 mA/cm$^2$ in a region of potential of 0 - 2 V relative to lithium, it is charged until x = 4 during the first cycle of charging and enabled to occlude about 4 mols of Li ions per mol of SiO$_y$ and it is discharged until x = 1.5 - 1.6 during the first cycle of discharging and enabled to release about 2.4-2.5 mols of Li ions and retain 1.5 - 1.6 mols of lithium ions unreleased and that the residual lithium ions surviving the release gradually increase by the subsequent several cycles of charging and discharging and reach about 1 mols after 4 to 5 cycles and the charging and discharging are stabilized thereafter. It is noted from Fig. 4 and Fig. 5 that when the x is in the range of 1.5 - 4, particularly 2 - 3.9, the differences between the open-circuit voltage and the charging voltage and the discharging voltage are small and the internal resistance is small and the potential is particularly low (base). These data indicate that an electrode using a lithium-containing silicon oxide $Li_xSiO_y$ as an active material has small polarization, excels in charging and discharging characteristics, and offers a base potential and, therefore, proves particularly favorable as a negative electrode when the lithium content x of the oxide is in the range of 1.5 - 4.0, especially 2.0 - 3.9.

(Example 2)

Fig. 6 is a cross section of a coin type battery as one example of the nonaqueous electrolyte secondary batter according to this invention. In the diagram, 11 stands for a negative electrode case concurrently serving as a negative terminal, obtained by drawing a stainless steel sheet having one of the outer faces thereof plated with Ni, 13 for a negative electrode formed of a negative electrode active material according to this invention described specifically herein below and adapted to be joined to the negative electrode case 11 with the aid of a negative electrode collector 12 made of a conducting adhesive agent having carbon as a conducting filler, 17 for a positive electrode case made of a stainless steel sheet having one of the outer faces thereof plated with Ni and adapted to serve concurrently as a positive electrode terminal, 15 for a positive electrode formed with a positive electrode active material according to this invention specifically described herein below and joined to the positive electrode case 17 with the aid of a positive electrode collector 16 formed of a conducting resin adhesive agent having carbon as a conducting filler, 14 for a separator made of a porous film of polypropylene and impregnated with a liquid electrolyte, and 18 for a gasket formed mainly of polypropylene, interposed between the negative electrode case 11 and the positive electrode case 17, and adapted to retain electric insulation between the negative electrode and the positive electrode and, at the same time, seal tightly the contents of a battery by causing the open edges of the positive electrode case to be folded inward and staked. The electrolyte to be used was what was obtained by solving lithium phosphate hexafluoride LiPF6 at a ratio of 1 mol/liter in a mixed solvent consisting of ethylene carbonate and diethyl carbonate at a volumetric ratio of 1 : 1. The test cell measured 20 mm in outside diameter and 1.6 mm in wall thickness.

The negative electrode 13 was manufactured as follows. A commercially available silicon monoxide SiO with an assay of 99.9% pulverized in an automatic mortar to a particle diameter of not more than 44 $\mu$m and then subjected to dressing was used as an active material. A negative electrode agent was obtained by mixing this active material, graphite as a conducting agent, a cross-linked acrylic acid resin as a binding agent, and a fluorine resin at a gravimetric ratio of 45 : 40 : 15. This negative electrode agent was press molded under 2 tons/cm$^2$ to produce a pellet, 15 mm in diameter and 0.14 - 0.20 mm in thickness. Then, the negative electrode pellet thus obtained was attached to the negative electrode case 11 with the aid of the negative electrode collector 12 formed of a conducting resin adhesive agent (conducting paste) having carbon as a conducting filler. A disc, 14 mm in diameter, punched out of a lithium film of a prescribed thickness was attached by contact superposition to the negative electrode pellet. The lithium-negative electrode pellet laminate electrode thus obtained was used as a negative electrode.

The positive electrode 15 was manufactured as follows. Vanadium pentoxide $V_2O_5$ was pulverized in an automatic mortar to a particle diameter of not more than 44 $\mu$m and then subjected to dressing was used as an active material. A positive electrode agent was obtained by mixing this active material, graphite as a conducting agent, a cross-linked acrylic acid resin as a binding agent, and a fluorine resin at a gravimetric ratio of 80 : 15 : 5. This positive electrode agent was press molded under 2 tons/cm$^2$ to produce a pellet, 16.2 mm in diameter and 0.51 - 0.57 mm in thickness. This pellet was dried under a decreased pressure at 100°C for 10 hours to obtain a positive electrode.

In the present example, five batteries A1 - A5 having molar ratios Li/Si respectively of 3.6, 4.0, 4.26, 4.5, and 5.2 were manufactured, wherein Li stands for the amount of lithium superposed on the negative electrode and Si for the amount of silicon in the negative electrode active material.

The batteries thus manufactured were left aging at room temperature for one week and then subjected to the following charging and discharging test. In consequence of this aging, the lithium-negative pellet laminate electrode as the negative electrode, on contact with the nonaqueous liquid electrolyte, formed one kind of local battery and the superposed lithium foil self-discharged, succumbed to occlusion into the SiO of the negative electrode, and produced a lithium-containing silicon oxide $Li_xSiO$.

These batteries were subjected to charging and discharging cycles under the conditions, 0.4 - 1.0 mA in constant current, 3.5 V in terminal charging voltage or 50 hours in duration of charging, and 2.0 V in terminal discharging voltage. The condition of occurrence of defective charging (abnormal variation of charging voltage) presumably due to an internal short-circuit formed in consequence of deposition of lithium dendrite and the capacity for discharging during the fifth cycle are shown in Table 1. The charging and discharging characteristics of the batteries, A2 and A5, are shown in Fig. 7 and Fig. 8. The charging and discharging cycles were started from discharging.

It is clearly noted from Table 1 and Fig. 7 and Fig. 8 that the batteries, A1 and A2, of this invention having Li/Si ratios not exceeding 4.0 produced no defective charging, exhibited high charging and discharging efficiencies, and excelled in charging and discharging characteristics, whereas the batteries, A3, A4, and A5, having Li-Si ratios exceeding 4.0 produced defective charging due to an internal short-circuit resulting from the occurrence of dendrite and suffered low charging and discharging efficiencies.

(Table 1)

| Battery | Li/Si | Discharging capacity (mAh) | Ratio of occurrence of defective charging |
|---------|-------|----------------------------|-------------------------------------------|
| A1 | 3.6 | 22.3 | 0 |
| A2 | 4.0 | 25.5 | 0 |
| A3 | 4.26 | 26.0 | Very slight |
| A4 | 4.5 | 25.3 | Small |
| A5 | 5.2 | 23.2 | Medium |

(Example 3)

This example concerns a case of using manganese dioxide $MnO_2$ as a positive electrode active material. A battery was manufactured by following the procedure of Example 2 while using a positive electrode, a negative electrode, and a liquid electrolyte manufactured as described below in the place of the positive electrode 15, the negative electrode 13, and the liquid electrolyte of Example 2 and giving the electrode an outside diameter of 6.8 mm and a thickness of 2.1 mm.

The positive electrode was manufactured as follows. The $\gamma \cdot \beta$-$MnO_2$ which was obtained by heat-treating elctrolyte manganese dioxide $MnO_2$ in the open air at 400°C for six hours was used as an active material. A positive electrode agent was formed by mixing this active material with graphite as a conducting agent, a cross-linked acrylic acid resin as a binding agent, and a fluorine resin at a gravimetric ratio of 80 : 15: 5. Then, this positive electrode agent was press molded under 2 tons/cm$^2$ to produce a pellet, 4.05 mm in diameter and 0.69 - 0.87 mm in thickness. This pellet was dried under a decreased pressure at 150°C for 10 hours to obtain a positive electrode.

The same agent as used in Example 2 was press molded under 2 tons/cm$^2$ to produce pellets, 4.05 mm in diameter and 0.24 - 0.40 mm in thickness. The pellets were used each as the negative electrode. A disc, 14 mm in diameter, punched out of a lithium film of a prescribed thickness was attached by contact superposition to the pellet to produce a lithium-negative electrode pellet laminate electrode.

The electrolyte to be used was what was obtained by solving LiPF6 at a ratio of 1 mol/liter in a mixed solvent consisting of ethylene carbonate and ethyl methyl carbonate at a volumetric ratio of 1 : 1.

In this example as in Example 2, two batteries B1 and B1 having molar ratios Li/Si respectively of 4.0 and 6.0 were manufactured, wherein Li stands for the amount of lithium superposed on the negative electrode and Si for the amount of silicon in the negative electrode active material. Further, the negative electrode agent, the amount of superposed lithium, and the positive electrode agent were adjusted so as to set the molar ratio Li/Mn at about 1 (0.91 - 0.99), wherein Li stands for the maximum amount of lithium released from the negative electrode and contained in the positive electrode in consequence of discharging.

The batteries thus manufactured were subjected to charging and discharging cycles performed under the conditions, 0.1 mA in constant current, 3.3 V in terminal charging voltage, and 2.0 V in terminal discharging voltage. The charging and discharging characteristics found herein are shown in Fig. 9 and Fig. 10.

It is clearly noted from Fig. 9 and Fig. 10 that the battery B1 of this invention having a Li/Si ratio not exceeding 4.0 produced no internal short-circuit, incurred only a small decrease in the capacity for discharging, and excelled in the charging and discharging characteristics.

(Example 4)

This example concerns a case of using as a positive electrode agent a transition metal oxide preparatorily containing lithium. A battery was manufactured by following the procedure of Example 2 while using a positive electrode, a negative electrode, and a liquid electrolyte manufactured as described below in the place of the negative electrode 13, the positive electrode 15, and the liquid electrolyte of Example 2.

The negative electrode was manufactured as follows. The same agent as used in Example 2 was press molded under 2 tons/cm$^2$ to produce negative electrode pellets, 15 mm in diameter and 0.11 - 0.20 mm in thickness. The negative electrode pellet was attached to a negative electrode case with the aid of a negative electrode collector formed of a conducting adhesive agent using carbon as a conducting filler and they were dried under a decreased pressure at 200°C for 10 hours. Then, a disc, 12 - 14 mm in diameter, punched out of a lithium film of a prescribed thickness was attached by contact superposition to the negative pellet to produce a lithium-negative electrode pellet laminate electrode.

The positive electrode was manufactured as follows. In a mortar, lithium hydroxide LiOH · $H_2O$, cobalt carbonate $CoCO_3$, and boron oxide $B_2O_3$ weighed out in amounts calculated to set a molar ratio of Li : Co : B at 1 : 0.9 : 0.1 were thoroughly mixed. The resultant mixture was fired in the open air at 850°C for 12 hours, cooled, pulverized to a particle diameter of not more than 44 $\mu$m, and subjected to dressing. By repeating the cycle of firing, pulverizing, and dressing twice, a positive electrode active material $LiCo_{0.9}B_{0.1}O_2$ according to this invention was synthesized.

A positive electrode agent was obtained by mixing the produced positive electrode active material with graphite as a conducting agent, a fluorine resin as a binding agent, and a cross-linked acrylic acid resin at a gravimetric ratio of 80 : 15: 5. Then, this positive electrode agent was press molded under 2 tons/cm$^2$ to produce pellets, 16.2 mm in diameter and 0.51 - 0.70 mm in thickness. These pellets were each dried under a decreased pressure at 100°C for 10 hours to produce a positive electrode.

The electrolyte to be used was what was obtained by solving lithium phosphate tetrafluoride $LiPF_6$ at a ratio of 1 mol/liter in a mixed solvent consisting of ethylene carbonate and diethyl carbonate at a volumetric ratio of 1 : 1.

In this example, 11 batteries were manufactured which had the amount of lithium superposed on the negative electrode and the amount of the positive electrode agent so adjusted that the molar ratio $x_a$ of lithium superposed on the negative electrode to Si in the negative electrode active material, the molar ratio $x_c$ of the amount of lithium releasable from the positive electrode (0.5 mol of lithium per mol of the positive electrode active material) to Si in the negative electrode active material, and the sum $x_a + x_c$ might equal the values of Table 2.

The batteries thus manufactured were each left aging at room temperature for one week and then subjected to the following charging and discharging test. In consequence of this aging, the lithium-negative pellet laminate electrode as the negative electrode, on contact with the nonaqueous liquid electrolyte, formed one kind of local battery and the superposed lithium foil self-discharged, succumbed to occlusion into the SiO of the negative electrode, and produced a lithium-containing silicon oxide $Li_xSiO$.

The batteries thus manufactured were subjected to charging and discharging cycles performed under the conditions, 1 mA in constant current, 4.2 V in terminal charging voltage or 50 hours in duration of charging, and 2.0 V in terminal discharging voltage. The condition of occurrence of defective charging (abnormal variation of charging voltage) presumably due to an internal short-circuit formed in consequence of deposition of lithium dendrite is shown in Table 2. The charging and discharging characteristics of the batteries, C6 and C7, are shown in Figs. 11 and 12. The charging and discharging cycles were started from discharging.

It is clearly noted from Table2, Figs. 11 and 12 that the batteries, C1, C3, C5, C6, C8, and C9, of this invention having total amounts of lithium x's not exceeding 4.0 in $Li_xSiO_y$ of the negative electrode during the charging produced no defective charging, exhibited high charging and discharging efficiencies, and excelled in charging and discharging characteristics, whereas the batteries, C2, C4., C7, C10, and C11, having x's exceeding 4.0 produced defective charging due to an internal short-circuit resulting from the occurrence of dendrite and suffered low charging and discharging efficiencies.

(Table 2)

| Battery | Superposed Li/Si $X_a$ | Positive electrode Li/Si $X_c$ | Total amount of Li, x ($X_a + X_c$) | Ratio of occurrence of defective charging |
|---|---|---|---|---|
| C1 | 0 | 4.0 | 4.0 | 0 |
| C2 | 0 | 5.9 | 5.9 | Large |
| C3 | 0.5 | 3.4 | 3.90 | 0 |
| C4 | 0.5 | 3.75 | 4.25 | Small |
| C5 | 1.5 | 2.1 | 3.6 | 0 |
| C6 | 1.5 | 2.5 | 4.0 | 0 |
| C7 | 1.5 | 3.0 | 4.5 | Small-Medium |
| C8 | 2.0 | 1.5 | 3.5 | 0 |
| C9 | 2.0 | 2.0 | 4.0 | 0 |
| C10 | 2.0 | 2.5 | 4.5 | Medium |
| C11 | 2.0 | 3.9 | 5.9 | Large |

(Example 5)

This example concerns a case of using the following positive electrode active material and the liquid electrolyte in the place of the positive electrode active material and the liquid electrolyte of Example 4. Batteries were manufactured by following the procedure of Example 4 while using the positive electrode active material and the liquid electrolyte mentioned above instead.

The positive electrode active material in this example was manufactured as follows. In a mortar, lithium hydroxide LiOH $\cdot$ H$_2$O, cobalt carbonate CoCO$_3$, and silicon dioxide SiO$_2$ weighed out in amounts calculated to set a molar ratio of Li : Co : Si at 1 : 0.9 : 0.1 were thoroughly mixed. The resultant mixture was fired in the open air at 850°C for 12 hours, cooled, pulverized to a particle diameter of not more than 44 $\mu$m, and subjected to dressing. By repeating the cycle of firing, pulverizing, and dressing twice, a composite oxide having an approximate composition of LiCo$_{0.9}$Si$_{0.1}$O$_{2.05}$ was obtained as a positive electrode active material of this example.

The electrolyte to be used was what was obtained by solving LiPF$_6$ at a ratio of 1 mol/liter in a mixed solvent consisting of ethylene carbonate and ethyl methyl carbonate at a volumetric ratio of 1 : 1.

When the batteries obtained as described above were subjected to a charging and discharging cycle test in the same manner as in Example 4 under the conditions, 1 mA in constant current, 4.2 V in terminal charging voltage, and 2.0 V in terminal discharging voltage, they showed decreases of 15 - 25% in the capacity for charging and discharging and a decrease in the ratio of occurrence of defective charging. When the total amounts of lithium x in the Li$_x$SiO$_y$ of the negative electrode exceeded 4.0, however, defective charging occurred owing to the formation of dendrite.

(Example 6)

This example concerns a case of using a lithium-containing manganese oxide as a positive electrode active material. A battery was manufactured by following the procedure of Example 3 while using the positive electrode and the liquid electrolyte manufactured as described herein below in the place of the positive electrode and the liquid electrolyte of Example 3.

The positive electrode was manufactured as follows. Elctrolyte manganese dioxide MnO$_2$, lithium hydroxide, and lithium nitrate weighed out in amounts calculated to set the molar ratio of Mn : Li at 1 : 0.3 were mixed. The product obtained by heat-treating the resultant mixture in the open air at 400°C for six hours was used as an active material (hereinafter referred to briefly as "d1"). A positive electrode active material was obtained by mixing this active material with graphite as a conducting agent, a cross-linked acrylic acid resin as a binding agent, and a fluorine resin at a gravimetric ratio of 87 : 10 : 3. Then, this positive electrode agent was press molded under 2 tons/cm$^2$ to produce a pellet, 4.05 mm in diameter and 0.83 mm in thickness. The pellet was dried under a decreased pressure at 150°C for 10 hours to produce a positive electrode.

The electrolyte to be used was what was obtained by solving LiPF$_6$ at a ratio of 1 mol/liter in a mixed solvent consisting of ethylene carbonate and ethyl methyl carbonate at a volumetric ratio of 1 : 1.

Further, the negative electrode agent, the amount of superposed lithium, and the positive electrode agent were adjusted so as to set the molar ratio Li/Si at 3.1, wherein Li stands for the amount of lithium superposed on the negative electrode and Si for the amount of Si in the negative electrode active material, and the molar ratio Li/Mn at 0.73, wherein Li stands for the total of the maximum amount of lithium contained in the positive electrode in consequence of discharging and the amount of lithium preparatorily contained therein and Mn for the amount of manganese in the positive electrode.

A battery D1 was manufactured as described above. For comparison, a battery D2 was manufactured by following the procedure used for the manufacture of the battery D1 while using as a positive electrode active material (d2) the $\gamma$ • $\beta$-$MnO_2$ obtained by heat-treating elctrolyte manganese dioxide in the open air at 400°C for six hours.

The batteries thus manufactured were subjected to charging and discharging cycles under the conditions, 0.1 mA in constant current, 3.3 V in terminal charging voltage, and 2 V in terminal discharging voltage. The capacities for discharging found in the second cycle and the 100th cycle are shown in Table 3.

(Table 3)

| Battery | Capacity for discharging (mAh) | |
|---------|--------------|-------------|
|         | Second cycle | 100th cycle |
| D1      | 2.17         | 1.61        |
| D2      | 1.27         | 0.55        |

It is clearly noted from Table 3 that the battery D1 using the lithium-containing manganese oxide as a positive electrode active material exhibited a large capacity for charging and discharging, incurred only a small decrease in the capacity for charging and discharging due to the repetition of charging and discharging, and excelled in charging and discharging characteristics as compared with the battery D2 using $MnO_2$ not preparatorily containing lithium.

Industrial Applicability

As described in detail above, this invention contemplates using as a negative electrode active material for a nonaqueous electrolyte secondary battery a lithium-containing silicon oxide represented by a compositional formula $Li_xSiO_y$, with the lithium content x and the oxygen content y regulated so as to satisfy respectively the expressions, $1.5 \leq x \leq 4$ and $0 < y < 2$ and, consequently, allows production of a secondary battery excelling in charging and discharging characteristics exhibited at a large current. The secondary battery obtained by this invention exhibits a high efficiency of charging and discharging, precludes the occurrence of such defects as an internal short-circuit due to the occurrence of dendrite, and offering an extremely stable and long cycle life.

**Claims**

1. A nonaqueous electrolyte secondary battery composed at least of a negative electrode, a positive electrode, and a lithium ion-conducting nonaqueous electrolyte, characterized by using as a negative electrode active material a lithium-containing silicon oxide represented by a compositional formula $Li_xSiO_y$, with the lithium content x and the oxygen content y regulated so as to satisfy respectively the expressions, $1.5 \leq x \leq 4$ and $0 < y < 2$.

2. A nonaqueous electrolyte secondary battery according to claim 1, wherein said negative electrode uses as an active material a lithium-containing silicon oxide $Li_xSiO_y$ having a lithium content x in the range of $2 \leq x \leq 4$ and said positive electrode uses as an active material a transition metal oxide not containing lithium prior to the assembly of said battery and destined to contain lithium in consequence of discharging after the manufacture of said battery or during the manufacture of said battery.

3. A nonaqueous electrolyte secondary battery according to claim 1, wherein said negative electrode uses as an active material a lithium-containing silicon oxide $Li_xSiO_y$ having a lithium content x in the range of $1.5 \leq x \leq 3.9$ and said positive electrode uses as an active material a transition metal oxide containing lithium.

4. A nonaqueous electrolyte secondary battery according to claim 1 or claim 3, wherein said positive electrode active material is a composite oxide represented by the compositional formula $Li_aT_bL_cO_d$, wherein T stands for at least one transition metal element selected from the group consisting of Co, Ni, Mn, Fe, V, W, Nb, and Ti, L stands for at least one element selected from the group consisting of B, Si, P, Mg, Zn, and Cu, and a, b, c, and d respectively satisfy the expressions, $0 < a \leqq 1.15$, $0.8 \leqq b + c \leqq 1.3$, $0 \leqq c$, and $1.7 \leqq d \leqq 2.5$.

5. A nonaqueous electrolyte secondary battery according to claim 1 or claim 2, wherein said positive electrode active material is a manganese dioxide which has been heat-treated at a temperature in the range of 300 - 450°C.

6. A nonaqueous electrolyte secondary battery according to any of claims 1, 2, and 5, wherein said secondary battery uses manganese dioxide as a positive electrode active material and enables said manganese dioxide to occlude lithium and form a lithium-containing manganese oxide in consequence at least of discharging and enables said lithium-containing manganese oxide to release lithium in consequence of charging and the contents of lithium in the positive electrode and the negative electrode are so regulated that the lithium content x of said lithium-containing manganese oxide per mol of manganese falls in the range of $0 \leqq x \leqq 1$ in either of the states of charging and discharging.

7. A nonaqueous electrolyte secondary battery according to claim 1 or claim 3, wherein said positive electrode active material is a lithium-containing manganese oxide represented by the compositional formula $Li_xMnO_y$ (wherein, x and y respectively satisfy the expressions, $0 \leqq x \leqq 4$ and $1 \leqq y \leqq 3$).

8. A nonaqueous electrolyte secondary battery according to claim 7, wherein the contents of lithium in the positive electrode and the negative electrode are so regulated that the lithium content x of said lithium-containing manganese oxide per mol of manganese falls in the range of $0.05 \leqq x \leqq 3$ in either of the states of charging and discharging.

9. A nonaqueous electrolyte secondary battery according to any of claims 1, 3, 7, and 8, wherein said positive electrode active material is a product obtained by heat-treating lithium and manganese in their simple substances or in the forms of oxides, hydroxides, or salts such as carbonates or nitrates or the like, mixtures thereof, or coprecipitates thereof at a temperature in the range of 300 - 1100°C.

10. A nonaqueous electrolyte secondary battery according to claim 9, wherein said positive electrode active material is a product obtained by heat-treating a mixture or coprecipitate of at least one member selected from the group consisting of oxide, hydroxide, and salts of lithium and manganese dioxide or a mixture thereof at a temperature in the range of 300 - 450°C.

11. A nonaqueous electrolyte secondary battery, characterized by using as a negative electrode active material a product obtained by causing a silicon oxide $SiO_y$ (wherein y satisfies the expression, $0 < y < 2$) being electrochemically reacted with lithium or a lithium-containing substance to incorporate lithium ions into the silicon oxide $SiO_y$ in amounts of a molar ratio of Li/Si in the range of 1.5 - 4.0, inside the battery after assembling the assembly of said battery or inside or outside said battery during the course of the production of said battery.

# F I G. 1

# F I G. 2

# F I G. 3

# F I G. 4

x in LixSiO

VOLTAGE (V)

INTERNAL RESISTANCE ( KΩ )

INTERNAL RESISTANCE

CHARGE VOLTAGE

OPEN-CIRCUIT VOLTAGE

CHARGE CAPACITY (mAH)

# F I G. 5

x in LixSiO

VOLTAGE (V)

INTERNAL RESISTANCE ( KΩ )

INTERNAL RESISTANCE

DISCHARGE VOLTAGE

OPEN-CIRCUIT VOLTAGE

DISCHARGE CAPACITY (mAH)

17

# F I G. 6

# F I G. 7

# F I G. 8

# F I G. 9

# F I G. 10

# F I G. 1 1

# F I G. 1 2

## INTERNATIONAL SEARCH REPORT

| International application No. |
| --- |
| PCT/JP96/01744 |

**A. CLASSIFICATION OF SUBJECT MATTER**

Int. Cl$^6$ H01M4/58

According to International Patent Classification (IPC) or to both national classification and IPC

**B. FIELDS SEARCHED**

Minimum documentation searched (classification system followed by classification symbols)

Int. Cl$^6$ H01M4/58

Documentation searched other than minimum documentation to the extent that such documents are included in the fields searched

| | |
| --- | --- |
| Jitsuyo Shinan Koho | 1926 - 1996 |
| Kokai Jitsuyo Shinan Koho | 1971 - 1995 |
| Toroku Jitsuyo Shinan Koho | 1994 - 1996 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP, 6-325765, A (Seiko Instruments Inc.), November 25, 1994 (25. 11. 94)(Family: none) | 1 - 11 |

☐ Further documents are listed in the continuation of Box C.  ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
| --- | --- |
| September 6, 1996 (06. 09. 96) | September 24, 1996 (24. 09. 96) |

| Name and mailing address of the ISA/ | Authorized officer |
| --- | --- |
| Japanese Patent Office | |
| Facsimile No. | Telephone No. |

Form PCT/ISA/210 (second sheet) (July 1992)